# EUROPEAN PATENT APPLICATION

(11) **EP 4 534 511 A1**
(43) Date of publication of application: **09.04.2025**
(21) Application number: 23811420.1
(22) Date of filing: 24.03.2023
(51) Int. Cl.: C04B 38/10, B28C 7/02, B28C 7/04, C04B 22/14, C04B 24/02, C04B 28/14

(54) **CURED GYPSUM OBJECT**

(30) Priority: 24.05.2022 JP 2022084351
(71) Applicant: Kao Corporation, Tokyo 103-8210 (JP)
(72) Inventor: TAMAGAWA, Ojiro, Wakayama-shi, Wakayama 640-8580 (JP); TANIMOTO, Ryu, Wakayama-shi, Wakayama 640-8580 (JP)
(74) Representative: Hoffmann Eitle
(86) International application number: PCT/JP2023/011693
(87) International publication number: WO 2023/228541

(57) **Abstract**

Provided are a gypsum hardened product and a method for producing the same, whereby, in bubble-containing gypsum hardened products of the same density and the same average bubble size, strength of the gypsum hardened product can be enhanced by controlling a coefficient of variation of bubble size.

A gypsum hardened product containing bubbles,
wherein a density of the gypsum hardened product is 0.4 g/cm³ or more and 0.8 g/cm³ or less, and
in the gypsum hardened product, an average bubble size is 200 µm or more and 600 µm or less, and a coefficient of variation of bubble size is 0.30 or more and 0.48 or less.

## Description

### Field of the Invention

The present invention relates to a gypsum hardened product and a method for producing the same.

### Background of the Invention

A weight reduction of a gypsum hardened product used for a gypsum board or the like has been achieved by introducing bubbles into a gypsum slurry containing gypsum and water. In usual, a gypsum slurry is mixed with a foam obtained by foaming a liquid composition containing a foaming agent composition and water and hardened to produce a lightweight gypsum hardened product containing bubbles.

JP-A 2004-508259 discloses a gypsum board product produced from a gypsum board product slurry containing 0.2 to 1.2 lbs./msf of a foaming agent-surfactant, 650 to 1000 lbs./msf of water and ≤1330 lbs./msf (6.53 kg/m²) of stucco, wherein the gypsum board product has a thickness of 1/2 inches, has paper on a back side and a surface side, has a total dry weight of approximately ≤1275 lbs./msf, and has a bubble diameter in the gypsum board product of ≤500 µm, and discloses that the gypsum board provides adequate strength and nail pull resistance. Further, the literature discloses in the Examples that gypsum boards with a thickness of 1/2 inches were produced, and they had dry weights of approximately 1235 and 1255 lbs./msf (approximately 0.380 and 0.386 g/cm³), respectively.

### Summary of the Invention

While a weight reduction of a bubble-containing gypsum hardened product containing gypsum as a hardening agent can be achieved by reducing a density by containing bubbles therein, the weight reduction results in reduced strength. As disclosed in paragraph [0004] of JP-A H10-330174, one possible method for suppressing strength reduction of a gypsum hardened product is to increase a bubble size therein, but there were limitations of the ability to increase the bubble size. Therefore, a technology for attaining both weight reduction and strength of a gypsum hardened product by controlling a bubble size therein is demanded.

The present invention provides a gypsum hardened product and a method for producing the same, whereby, in bubble-containing gypsum hardened products of the same density and the same average bubble size, strength of the gypsum hardened product can be enhanced by controlling a coefficient of variation of bubble size.

The present invention relates to a gypsum hardened product containing bubbles,
wherein a density of the gypsum hardened product is 0.4 g/cm³ or more and 0.8 g/cm³ or less, and
in the gypsum hardened product, an average bubble size is 200 µm or more and 600 µm or less, and a coefficient of variation of bubble size is 0.30 or more and 0.48 or less.

Further, the present invention relates to a method for producing the gypsum hardened product of the present invention, including the following steps 1, 2 and 3,
<step 1>
   a step of foaming a liquid composition containing a foaming agent composition containing (A) a surfactant (hereinafter referred to as component (A)) and water to obtain a foam,
<step 2>
   a step of mixing the foam obtained in step 1 with a gypsum slurry containing gypsum and water to obtain a bubble-containing gypsum slurry, and
<step 3>
   a step of molding and hardening the bubble-containing gypsum slurry after step 2.

According to the present invention, provided are a gypsum hardened product and a method for producing the same, whereby, in bubble-containing gypsum hardened products of the same density and the same average bubble size, strength of the gypsum hardened product can be enhanced by controlling a coefficient of variation of bubble size.

### Embodiments of the Invention

The reason why the gypsum hardened product and the method for producing the same of the present invention can enhance, in bubble-containing gypsum hardened products of the same density and the same average bubble size, strength of the gypsum hardened product by controlling a coefficient of variation of bubble size is not wholly certain, but it is inferred to be as follows.

Conventionally, as disclosed, for example, in a prior art literature (JP-A 2004-529050), relatively large bubbles have been introduced into a gypsum hardened product to improve mechanical strength of the gypsum hardened product. Further, in JP-A H10-330174, relatively large uniform bubbles are dispersed in a core to improve adhesiveness to base paper and strength of a gypsum hardened product.

The present inventors found that strength of a gypsum hardened product can be enhanced by making a coefficient of variation of bubble size in the gypsum hardened product fall within a specific range.

More specifically, the above problem is solved by making a coefficient of variation of bubble size in a gypsum hardened product fall within the range of 0.30 or more and 0.48 or less. A larger coefficient of variation means a larger bubble size variation, and a smaller coefficient of variation means a smaller bubble size variation. When a bubble size variation is too large, fragile sites are locally present in a gypsum hardened product as it contains coarse bubbles which intensify stress concentration, and breakage occurs therefrom and strength is reduced. On the other hand, when bubbles in a gypsum hardened product are uniform in size, and a variation is too small, the bubbles in the gypsum hardened product communicate with one another due to a narrowed inter-bubble distance and behave as coarse bubbles, and thus, stress concentration is intensified and strength is reduced. In contrast, it is inferred that, in the region of a specific coefficient of variation, in which coarse bubbles are not contained and an inter-bubble distance is kept at a certain level or more, communication of bubbles can be suppressed and a locally fragile structure can be avoided, and thus, strength improvement of a gypsum hardened product can be achieved even in gypsum hardened products of the same average bubble size. It is further inferred that a gypsum hardened product with an average bubble size falling within the specific range of the present invention maintains its strength even with a reduced density, and thus, both weight reduction and strength improvement of the hardened product can be achieved.

Note that the present invention is not limited to the above expression mechanism.

### [Gypsum hardened product]

A gypsum hardened product in the present invention is a product obtained by drying and hardening a gypsum slurry containing bubbles, gypsum and water. The gypsum hardened product contains bubbles.

A density of the gypsum hardened product of the present invention is 0.4 g/cm³ or more and preferably 0.5 g/cm³ or more from the viewpoint of fire resistance, and 0.8 g/cm³ or less and preferably 0.75 g/cm³ or less from the viewpoint of handleability.

An average bubble size in the gypsum hardened product of the present invention is 200 µm or more, preferably 250 µm or more, more preferably 300 µm or more, further preferably 400 µm or more and furthermore preferably 500 µm or more from the viewpoint of improving strength of the gypsum hardened product under the same density, and 600 µm or less and preferably 580 µm or less from the viewpoint of improving strength and aesthetic cross-sectional appearance of the gypsum hardened product under the same density. Examples of a method for adjusting an average bubble size in a gypsum hardened product include selecting a surfactant type of component (A) as a foaming component contained in the gypsum hardened product, adding an alcohol of component (B) listed later or the like.

The average bubble size is calculated from an average (arithmetic mean) of values of diameters of 100 bubble cross sections arbitrarily measured by observing, with a digital microscope, a cross section produced by preparing the bubble-containing gypsum hardened product and arbitrarily cutting the hardened product. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section.

A coefficient of variation of bubble size in the gypsum hardened product of the present invention is 0.30 or more, preferably 0.32 or more and more preferably 0.34 or more from the viewpoint of improving adhesiveness of base paper in a gypsum board, and 0.48 or less, preferably 0.45 or less, more preferably 0.43 or less, further preferably 0.40 or less, furthermore preferably 0.38 or less and furthermore preferably 0.36 or less from the viewpoint of improving strength of the gypsum hardened product. Examples of a method for adjusting a coefficient of variation of bubble size in a gypsum hardened product include selecting a surfactant type of component (A) as a foaming component contained in the gypsum hardened product, adjusting a viscosity of a gypsum slurry using a water reducing agent or the like, selecting a stirring rate or a stirring time for kneading a foam with the gypsum slurry or the like.

The coefficient of variation of bubble size is calculated by the following formula (1) using a standard deviation in the 100 bubble sizes measured in the measurement operation of the average bubble size in the bubble-containing gypsum hardened product and the average bubble size. Coefficient of variation of bubble size = bubble size standard deviation/average bubble size

The gypsum hardened product of the present invention can be obtained by drying a gypsum slurry containing bubbles, gypsum and water. A foaming agent composition described later can be used to contain bubbles in the gypsum hardened product of the present invention, and examples of the foaming agent composition include a composition containing a surfactant, a monohydric alcohol with 6 or more and 10 or less carbons and a nonionic compound with a LogP of 0 or more and less than 2.0.

The gypsum hardened product of the present invention preferably contains (A) a surfactant (hereinafter referred to as component (A)) and gypsum.

Examples of the surfactant of component (A) include one or more selected from (A1) an anionic surfactant (hereinafter referred to as component (A1)) and (A2) a nonionic surfactant (hereinafter referred to as component (A2)).

Examples of the anionic surfactant of component (A1) include a sulfonic acid compound, an ether sulfate compound, a carboxylic acid compound, a phosphonic acid compound, a phosphoric acid compound or the like having a hydrocarbon group with 8 or more and 18 or less carbons. Examples include, for example, one or more selected from an alkyl or alkenyl sulfate having an alkyl group or an alkenyl group, an alkyl or alkenyl sulfonic acid having an alkyl group or an alkenyl group, an olefin sulfonic acid, a polyoxyalkylene alkyl or alkenyl ether sulfate having an alkyl group or an alkenyl group, a polyoxyalkylene alkyl or alkenyl ether carboxylic acid having an alkyl group or an alkenyl group and salts of these.

Examples of the salts of these anionic surfactants include one or more selected from an alkali metal salt such as a sodium salt, a potassium salt or the like, an ammonium salt and an organic ammonium salt.

Component (A1) is preferably (A11) an alkyl or alkenyl sulfate or a salt thereof having an alkyl group or an alkenyl group with 8 or more and 18 or less carbons (hereinafter referred to as component (A11)) from the viewpoints of increasing a bubble size in the gypsum hardened product and reducing an addition amount of a foaming agent composition to be contained in the gypsum slurry.

Component (A11) has an alkyl group or an alkenyl group and preferably an alkyl group with 8 or more and preferably 10 or more, and 18 or less, preferably 16 or less, more preferably 14 or less and further preferably 12 or less carbons from the viewpoints of increasing a bubble size in the gypsum hardened product and reducing an addition amount of a foaming agent composition to be contained in the gypsum slurry.

Examples of the salt of component (A1) include one or more selected from an alkali metal salt such as a sodium salt, a potassium salt or the like, an ammonium salt and an organic ammonium salt.

Specific examples of component (A11) include one or more selected from octyl sulfate, decyl sulfate, dodecyl sulfate, tetradecyl sulfate, hexadecyl sulfate, octadecyl sulfate, 2-ethylhexyl sulfate, 2-propylheptyl sulfate and salts of these, and from the viewpoints of increasing a bubble size in the gypsum hardened product and reducing an addition amount of a foaming agent composition to be contained in the gypsum slurry, component (A11) preferably contains one or more compounds selected from octyl sulfate, decyl sulfate, dodecyl sulfate, tetradecyl sulfate and salts of these and more preferably contains one or more compounds selected from decyl sulfate, dodecyl sulfate and salts of these.

The gypsum hardened product of the present invention preferably contains an alkyl or alkenyl sulfate or a salt thereof having an alkyl group or an alkenyl group with 10 carbons as component (A11) from the viewpoints of increasing a bubble size and reducing a coefficient of variation of bubble size in the gypsum hardened product.

A content of an alkyl or alkenyl sulfate or a salt thereof having an alkyl group or an alkenyl group with 10 carbons in component (A11) is preferably 50 mass% or more, more preferably 60 mass% or more, further preferably 70 mass% or more, further preferably 80 mass% or more and more preferably 90 mass% or more, and 100 mass% or less from the viewpoints of increasing a bubble size and reducing a coefficient of variation of bubble size in the gypsum hardened product.

Examples of the nonionic surfactant of component (A2) include an alkylene oxide compound, a polyhydric alcohol compound or the like having a hydrocarbon group with 8 or more and 18 or less carbons, and include, for example, one or more selected from an alkyl monoglyceryl ether, a polyoxyalkylene monoalkyl or alkenyl ether, an alkyl glycoside or an alkyl polyglycoside (an alkyl glycoside-type nonionic surfactant), a sorbitan-based nonionic surfactant, an aliphatic alkanol amide, a fatty acid monoglyceride and a sucrose fatty acid ester.

Component (A2) is preferably (A21) an alkyl glycoside-type nonionic surfactant (hereinafter referred to as component (A21)) from the viewpoints of reducing a coefficient of variation of bubble size in the gypsum hardened product and reducing an addition amount of a foaming agent composition to be contained in the gypsum slurry.

Examples of component (A21) include an alkyl glycoside-type surfactant represented by the following general formula (A21):

R^{1a}-(OR^{2a})ₚG_{q} (A21)

wherein R^{1a} represents an alkyl group with 6 or more and 18 or less carbons, R^{2a} represents an alkylene group with 2 or more and 4 or less carbons, G represents a residue derived from a reducing sugar, p represents a number of 0 or more and 10 or less representing an average number of added moles of the oxyalkylene group, R^{2a}ₚ may be the same or different, and q represents a number of 1 or more and 3 or less representing an average degree of condensation of G.

In the formula (A21), R^{1a} has preferably 8 or more and more preferably 10 or more, and preferably 14 or less and more preferably 12 or less carbons from the viewpoints of reducing a coefficient of variation of bubble size in the gypsum hardened product and improving foamability of a foaming agent composition to be contained in the gypsum slurry.

R^{2a} is preferably an ethylene group or a propylene group and more preferably an ethylene group.

p is preferably 5 or less and more preferably 2 or less, and may be 0.

q is preferably 2.5 or less and more preferably 2 or less.

Examples of G include a residue derived from a monosaccharide such as glucose, galactose, xylose, mannose, lyxose, arabinose or fructose or a mixture of these or the like, and include a residue derived from a di- or higher polysaccharide such as maltose, xylobiose, isomaltose, cellobiose, gentiobiose, lactose, sucrose, nigerose, turanose, raffinose, gentianose or melezitose or a mixture of these or the like. Among these, preferable raw materials are glucose and fructose in the monosaccharides and maltose and sucrose in the di- or higher polysaccharides from the viewpoint of availability.

As the gypsum, any gypsum such as high-quality neutralized gypsum, phosphogypsum, a byproduct of phosphoric acid, flue gas desulfurization gypsum generated by thermal power generation, natural gypsum containing various impurities or clays, a mixture of them or the like can be used.

Clay contained in gypsum is composed mainly of hydrous silicate minerals with a layered structure (hereinafter referred to as clay minerals), and examples of clay minerals contained as fine-grained minerals in this clay include kaolin minerals (kaolinite, dickite and nacrite), serpentine (lizardite, antigorite and chrysotile), mica clay minerals (illite, sericite, glauconite and celadonite), chlorite, vermiculite and smectite (montmorillonite, beidellite, nontronite, saponite and hectorite).

Examples of the gypsum include one or more selected from anhydrous gypsum and hemihydrate gypsum. As a raw material gypsum, natural gypsum or chemical gypsum such as neutralized gypsum or by-product gypsum or the like can be used alone or a mixture of two or more of them can be used. Examples of major chemical gypsum include phosphogypsum, fluorogypsum, titanium gypsum or flue gas desulfurization gypsum or the like. Further, raw material gypsums may also include recycled gypsum. Recycled gypsum may be any recycled gypsum recovered from waste gypsum boards generated in-house by gypsum board manufacturers or waste gypsum boards generated during new construction and during demolition or the like. The present invention can be suitably used for any raw material gypsum of these, and also has excellent effects on those which are obtained by blending them at various proportions.

The gypsum hardened product of the present invention has a water/gypsum ratio of preferably 20 mass% or more, more preferably 30 mass% or more, further preferably 40 mass% or more, furthermore preferably 50 mass% or more and furthermore preferably 60 mass% or more from the viewpoints of improving fluidity of the gypsum slurry, and further, increasing an average bubble size and reducing a coefficient of variation of bubble size in the gypsum hardened product to improve strength, and preferably 100 mass% or less, more preferably 90 mass% or less and further preferably 80 mass% or less from the viewpoint of improving strength of the gypsum hardened product.

Here, the water/gypsum ratio is a mass percentage (mass%) of water to gypsum in the gypsum hardened product, and is calculated by water/gypsum × 100. Further, the water/gypsum ratio may be a mass percentage of water to gypsum in the gypsum slurry of the gypsum hardened product before hardening.

The gypsum hardened product of the present invention contains component (A) in an amount relative to 100 parts by mass of gypsum of preferably 0.001 parts by mass or more, more preferably 0.004 parts by mass or more and further preferably 0.01 parts by mass or more from the viewpoint of reducing a density of the gypsum hardened product, and preferably 0.1 parts by mass or less, more preferably 0.06 parts by mass or less and further preferably 0.03 parts by mass or less from the viewpoint of improving strength of the gypsum hardened product.

In the present invention, when the product contains component (A1) in component (A), a mass of component (A1) is specified using a value expressed in terms of a sodium salt.

The above content of component (A) may be a content in the gypsum slurry of the gypsum hardened product before hardening.

When the gypsum hardened product of the present invention contains component (A1) as component (A), the product contains component (A1) in an amount relative to 100 parts by mass of gypsum of preferably 0.001 parts by mass or more, more preferably 0.004 parts by mass or more and further preferably 0.01 parts by mass or more from the viewpoint of reducing a density of the gypsum hardened product, and preferably 0.1 parts by mass or less, more preferably 0.06 parts by mass or less and further preferably 0.03 parts by mass or less from the viewpoint of improving strength of the gypsum hardened product.

The above content of component (A1) may be a content in the gypsum slurry of the gypsum hardened product before hardening.

When the gypsum hardened product of the present invention contains component (A11) as component (A), the product contains component (A11) in an amount relative to 100 parts by mass of gypsum of preferably 0.001 parts by mass or more, more preferably 0.004 parts by mass or more and further preferably 0.01 parts by mass or more from the viewpoint of reducing a density of the hardened product, and preferably 0.1 parts by mass or less, more preferably 0.06 parts by mass or less and further preferably 0.03 parts by mass or less from the viewpoint of increasing a bubble size in the gypsum hardened product to improve strength.

The above content of component (A11) may be a content in the gypsum slurry of the gypsum hardened product before hardening.

When the gypsum hardened product of the present invention contains component (A2) as component (A), the product contains component (A2) in an amount relative to 100 parts by mass of gypsum of preferably 0.0001 parts by mass or more, more preferably 0.0005 parts by mass or more and further preferably 0.001 parts by mass or more from the viewpoint of reducing a density of the gypsum hardened product, and preferably 0.01 parts by mass or less, more preferably 0.006 parts by mass or less and further preferably 0.003 parts by mass or less from the viewpoint of reducing a coefficient of variation of bubble size in the gypsum hardened product to improve strength.

The above content of component (A2) may be a content in the gypsum slurry of the gypsum hardened product before hardening.

The gypsum hardened product of the present invention can further contain a monohydric alcohol with 6 or more and 10 or less carbons as component (B) from the viewpoint of improving quick foamability and foam stability of a foaming agent composition to be contained in the gypsum slurry to increase a bubble size in the gypsum hardened product.

Component (B) has 6 or more, and 10 or less and preferably 8 carbons from the viewpoint of improving quick foamability and foam stability of a foaming agent composition to be contained in the gypsum slurry.

Component (B) is a monohydric alcohol having a linear or branched hydrocarbon group, preferably a linear or branched alkyl group and more preferably a linear alkyl group from the viewpoint of improving quick foamability and foam stability of a foaming agent composition to be contained in the gypsum slurry.

Specific examples of component (B) include one or more selected from hexanol, octanol, decanol, 2-ethylhexanol, cyclohexanol, benzyl alcohol and 2-propylheptanol. Component (B) preferably contains preferably one or more selected from octanol and decanol and more preferably octanol from the viewpoint of improving quick foamability and foam stability of a foaming agent composition to be contained in the gypsum slurry to increase a bubble size in the gypsum hardened product. A content of one or more selected from octanol and decanol in component (B) is preferably 80 mass% or more and more preferably 90 mass% or more, and preferably 100 mass% or less and further preferably substantially 100 mass%. Further, a content of octanol in component (B) is preferably 80 mass% or more and more preferably 90 mass% or more, and preferably 100 mass% or less and further preferably substantially 100 mass%.

The gypsum hardened product of the present invention contains component (B) in an amount relative to 100 parts by mass of gypsum of preferably 0.00005 parts by mass or more, more preferably 0.0001 parts by mass or more, further preferably 0.0005 parts by mass or more and furthermore preferably 0.001 parts by mass or more from the viewpoints of improving quick foamability and foam stability of a foaming agent composition to be contained in the gypsum slurry to increase a bubble size in the gypsum hardened product and reducing a density of the gypsum hardened product, and preferably 0.01 parts by mass or less, more preferably 0.005 parts by mass or less and further preferably 0.003 parts by mass or less from the viewpoint of reducing odor.

The above content of component (B) may be a content in the gypsum slurry of the gypsum hardened product before hardening.

The gypsum hardened product of the present invention can further contain a nonionic compound with a LogP of 0 or more and less than 2.0 as component (C) from the viewpoint of suppressing separation of a foaming agent composition to be contained in the gypsum slurry. However, component (C) excludes a compound qualifying as component (B).

The LogP of component (C) is 0 or more, preferably 0.4 or more, more preferably 0.8 or more and further preferably 1.0 or more, and less than 2.0, preferably 1.5 or less and more preferably 1.0 or less from the viewpoint of liquid phase stability of a foaming agent composition to be contained in the gypsum slurry.

In the present invention, a logP value is a coefficient indicating affinities of an organic compound for water and 1-octanol. The 1-octanol/water partition coefficient P is, in distribution equilibrium when a trace amount of a compound is dissolved as a solute in the two liquid phase solvents 1-octanol and water, a ratio between equilibrium concentrations of the compound in the respective solvents, and generally expressed in the form of the logarithm logP thereof to base 10. Log P values of many compounds have been reported, and a database available from Daylight Chemical Information Systems, Inc. (Daylight CIS) or the like, in which many values are listed, can be referred to. If there is no measured log P value, it can be calculated by the program "ClogP" available from Daylight CIS or the like. This program outputs a value of "calculated logP (ClogP)" calculated by the Hansch, Leo fragment approach together with a measured logP value if any.

The fragment approach is based on a chemical structure of a compound, and takes an atomic number and a chemical bond type into consideration (cf. A. Leo, Comprehensive Medicinal Chemistry, Vol. 4, C. Hansch, P. G. Sammens, J. B. Taylor and C. A. Ramsden, Eds., p. 295, Pergamon Press, 1990). This ClogP value can be used instead of a measured logP value at the selection of a compound. In the present invention, a measured value of logP is used if any, or if there is none, a ClogP value calculated by the program CLOGP v 4.01 is used.

Examples of the nonionic compound of component (C) include one or more selected from an alcohol (excluding component (B)), a glycol ether and an aldehyde. However, these nonionic compounds need to have a logP falling within the above range.

The alcohol is preferably a monohydric alcohol, and examples include one or more selected from 1-propanol (logP: 0.25), 2-propanol (LogP: 0.05), 1-butanol (logP: 0.88), 2-butanol (LogP: 0.61), 2-methyl-1-propanol (LogP: 0.76), 2-methyl-2-propanol (LogP: 0.35), 1-pentanol (LogP: 1.51), 2-pentanol (LogP: 1.19), 3-pentanol (LogP: 1.21), 2-methyl-1-butanol (logP: 1.29), 2-methyl-2-butanol (LogP: 0.89), 3-methyl-2-butanol (LogP: 1.28), 3-methyl-1-butanol (LogP: 1.16) and cyclopentanol (LogP: 0.71).

The glycol ether is preferably a glycol ether having a hydrocarbon group with 7 or less carbons, and examples include one or more selected from diethylene glycol monobutyl ether (logP: 0.56), ethylene glycol monobutyl ether (logP: 0.81), ethylene glycol monophenyl ether (logP: 1.16), triethylene glycol monobutyl ether (logP: 0.02) and propylene glycol monobutyl ether (logP: 1.15).

Examples of the aldehyde include one or more selected from butanal (logP: 0.88), pentanal (logP: 1.31), hexanal (logP: 1.78), benzaldehyde (logP: 1.48) and cinnamaldehyde (logP: 1.9).

Examples of component (c) other than an alcohol, a glycol ether and an aldehyde include one or more selected from butyl lactate (logP: 0.8), dimethyl ether (logP: 0.1), diethyl ether (logP: 0.89), diisopropyl ether (logP: 1.52), tetrahydrofuran (logP: 0.46), propanoic acid (logP: 0.33), butanoic acid (logP: 0.79), pentanoic acid (logP: 1.39), hexanoic acid (logP: 1.92) and benzoic acid (logP: 1.87).

Component (C) is preferably one or more selected from 1-butanol, 2-butanol, 2-methyl-1-propanol, 2-methyl-1-butanol, benzaldehyde, ethylene glycol monobutyl ether, propylene glycol monobutyl ether and diethylene glycol monobutyl ether and more preferably one or more selected from 1-butanol, 2-methyl-1-butanol, diethylene glycol monobutyl ether and benzaldehyde from the viewpoint of suppressing separation of a foaming agent composition to be contained in the gypsum slurry.

The gypsum hardened product of the present invention contains component (C) in an amount relative to 100 parts by mass of gypsum of preferably 0.0001 parts by mass or more, more preferably 0.0005 parts by mass or more and further preferably 0.001 parts by mass or more from the viewpoint of suppressing separation of a foaming agent composition to be contained in the gypsum slurry, and preferably 0.01 parts by mass or less, more preferably 0.007 parts by mass or less and further preferably 0.005 parts by mass or less from the viewpoint of economic efficiency.

The above content of component (C) may be a content in the gypsum slurry of the gypsum hardened product before hardening.

The gypsum hardened product of the present invention can contain an additive for use in gypsum boards or the like. Such an additive includes a water reducing agent, an anti-foaming agent, a foam control agent, a hardening accelerating agent, a hardening control agent, a water repellent, an adhesive, a retarder or the like, and production of a gypsum board is also performed by further adding glass fiber, carbon fiber, used paper, virgin pulp or the like as reinforcing fiber or together with a lightweight aggregate such as perlite, styrene foam or the like.

Examples of the water reducing agent include one or more selected from a naphthalene sulfonic acid-based polymer, a polycarboxylic acid-based polymer, a melamine sulfonic acid-based polymer and a phosphate-based polymer or the like, and one or more selected from a naphthalene sulfonic acid-based polymer and a polycarboxylic acid-based polymer are preferable.

Examples of the hardening accelerating agent include one or more selected from dihydrate gypsum and potassium sulfate.

The gypsum hardened product of the present invention can be suitably used for gypsum boards, fire-resistant materials or the like.

### [Method for producing gypsum hardened product]

The present invention provides a method for producing the gypsum hardened product of the present invention, including the following steps 1, 2 and 3,
<step 1>
   a step of foaming a liquid composition containing a foaming agent composition (hereinafter referred to as the foaming agent composition of the present invention) containing (A) a surfactant (hereinafter referred to as component (A)) and water to obtain a foam,
<step 2>
   a step of mixing the foam obtained in step 1 with a gypsum slurry containing gypsum and water to obtain a bubble-containing gypsum slurry, and
<step 3>
   a step of molding and hardening the bubble-containing gypsum slurry after step 2.

The gypsum hardened product of the present invention can be produced by this producing method.

The aspects stated in the gypsum hardened product of the present invention can be appropriately applied to the method for producing the gypsum hardened product of the present invention.

### <Step 1>

Step 1 is a step of foaming a liquid composition containing the foaming agent composition of the present invention and water to obtain a foam.

The foaming agent composition of the present invention contains a surfactant as component (A).

Component (A) is the same as component (A) stated in the gypsum hardened product of the present invention, and the preferable aspects are also the same.

The foaming agent composition of the present invention contains component (A) in an amount of preferably 5 mass% or more, more preferably 10 mass% or more, further preferably 15 mass% or more, furthermore preferably 20 mass% or more and furthermore preferably 25 mass% or more from the viewpoints of reducing a density of the gypsum hardened product and reducing an addition amount of the foaming agent composition, and preferably 60 mass% or less, more preferably 50 mass% or less, further preferably 40 mass% or less and furthermore preferably 35 mass% or less from the viewpoints of improving strength of the gypsum hardened product and suppressing separation of the foaming agent composition.

When the foaming agent composition of the present invention contains component (A1) as component (A), the composition contains component (A1) in an amount of preferably 5 mass% or more, more preferably 10 mass% or more, further preferably 15 mass% or more, furthermore preferably 20 mass% or more and furthermore preferably 25 mass% or more from the viewpoints of reducing a density of the gypsum hardened product and reducing an addition amount of the foaming agent composition, and preferably 60 mass% or less, more preferably 50 mass% or less, further preferably 40 mass% or less and furthermore preferably 35 mass% or less from the viewpoints of improving strength of the gypsum hardened product and suppressing separation of the foaming agent composition.

When the foaming agent composition of the present invention contains component (A11) as component (A), the composition contains component (A11) in an amount of preferably 5 mass% or more, more preferably 10 mass% or more, further preferably 15 mass% or more, furthermore preferably 20 mass% or more and furthermore preferably 25 mass% or more from the viewpoints of reducing a density of the hardened product and reducing an addition amount of the foaming agent composition, and preferably 60 mass% or less, more preferably 50 mass% or less, further preferably 40 mass% or less and furthermore preferably 35 mass% or less from the viewpoints of increasing a bubble size in the gypsum hardened product to improve strength and suppressing separation of the foaming agent composition.

When the foaming agent composition of the present invention contains component (A2) as component (A), the composition contains component (A2) in an amount of preferably 0.5 mass% or more, more preferably 1 mass% or more and further preferably 1.5 mass% or more from the viewpoints of reducing a density of the gypsum hardened product and reducing an addition amount of the foaming agent composition, and preferably 10 mass% or less, more preferably 7 mass% or less, further preferably 4 mass% or less, furthermore preferably 3 mass% or less and furthermore preferably 2.5 mass% or less from the viewpoints of reducing a coefficient of variation of bubble size in the gypsum hardened product to improve strength and suppressing separation of the foaming agent composition.

The foaming agent composition of the present invention can further contain a monohydric alcohol with 6 or more and 10 or less carbons as component (B) from the viewpoint of reducing an addition amount of the foaming agent composition.

Component (B) is the same as component (B) stated in the gypsum hardened product of the present invention, and the preferable aspects are also the same.

When the foaming agent composition of the present invention contains component (B), the composition contains component (B) in an amount of preferably 1 mass% or more, more preferably 2 mass% or more and further preferably 2.5 mass% or more from the viewpoints of increasing a bubble size in the gypsum hardened product and reducing a density of the gypsum hardened product, and improving quick foamability and foam stability of the foaming agent composition, and preferably 30 mass% or less, more preferably 20 mass% or less, further preferably 10 mass% or less, furthermore preferably 5 mass% or less and furthermore preferably 4 mass% or less from the viewpoint of suppressing separation of the foaming agent composition.

The foaming agent composition of the present invention can further contain a nonionic compound with a LogP of 0 or more and less than 2.0 (excluding a compound qualifying as component (B)) as component (C) from the viewpoint of suppressing separation of the foaming agent composition.

Component (C) is the same as component (C) stated in the gypsum hardened product of the present invention, and the preferable aspects are also the same.

When the foaming agent composition of the present invention contains component (C), the composition contains component (C) in an amount of preferably 2 mass% or more, more preferably 3 mass% or more and further preferably 4 mass% or more from the viewpoint of suppressing separation of the foaming agent composition, and preferably 20 mass% or less, more preferably 15 mass% or less, further preferably 10 mass% or less, furthermore preferably 6 mass% or less and furthermore preferably 5 mass% or less from the viewpoint of reducing an addition amount of the foaming agent composition.

The foaming agent composition of the present invention contains water.

The foaming agent composition of the present invention contains water in an amount of preferably 10 mass% or more, more preferably 20 mass% or more, further preferably 30 mass% or more, furthermore preferably 40 mass% or more and furthermore preferably 50 mass% or more, and preferably 90 mass% or less, more preferably 80 mass% or less and further preferably 70 mass% or less.

The foaming agent composition of the present invention can contain a thickener, a chelating agent, a heavy metal scavenger, a rust inhibitor, a preservative, a colorant, a fragrance, an anti-foaming agent, a flocculant, a water-soluble polymer or the like as another component. Those which do not qualify as components (A), (B) and (C) are used for them.

In step 1, the liquid composition containing the foaming agent composition of the present invention and water is foamed to obtain a foam. An expansion ratio of the liquid composition is preferably 3 times or more, more preferably 5 times or more and further preferably 7 times or more from the viewpoint of economic efficiency, and preferably 20 times or less, more preferably 15 times or less and further preferably 10 times or less from the viewpoint of kneading performance for the gypsum slurry and the foam.

### <Step 2>

In step 2, the foam obtained in step 1 is mixed with a gypsum slurry containing gypsum and water to obtain a bubble-containing gypsum slurry.

The gypsum slurry preferably contains a water reducing agent from the viewpoint of adjusting a viscosity of the gypsum slurry to control a coefficient of variation of bubble size in the gypsum hardened product.

Examples of the water reducing agent include one or more selected from a naphthalene sulfonic acid-based polymer, a polycarboxylic acid-based polymer, a melamine sulfonic acid-based polymer and a phosphate-based polymer or the like, and one or more selected from a naphthalene sulfonic acid-based polymer and a polycarboxylic acid-based polymer are preferable.

Further, the gypsum slurry can contain a hardening accelerating agent.

Examples of the hardening accelerating agent include one or more selected from dihydrate gypsum and potassium sulfate.

In step 2, the foam is mixed in an amount relative to the gypsum slurry of preferably 50 volume% or more, more preferably 75 volume% or more and further preferably 100 volume% or more from the viewpoint of a weight reduction of the hardened product, and preferably 200 volume% or less, more preferably 150 volume% or less and further preferably 100 volume% or less from the viewpoint of improving strength of the hardened product. In this producing method, an admixture agent publicly known in this industry can be mixed in step 1 and/or step 2.

In step 2, the content of component (A), (A1), (A2), (B) or (C) stated in the gypsum hardened product of the present invention can be appropriately applied by reading it as a mixing amount of each component in the bubble-containing gypsum slurry. A water/gypsum ratio in the bubble-containing gypsum slurry falls within the same range of the water/gypsum ratio stated in the gypsum hardened product of the present invention. Temperatures of the foam and the gypsum slurry used for mixing are each preferably 15°C or more and 40°C or less.

In step 2, a kneading rate for the foam and the gypsum slurry is preferably 250 rpm or more, more preferably 500 rpm or more, further preferably 750 rpm or more and furthermore preferably 1000 rpm or more from the viewpoints of increasing a bubble size and reducing a coefficient of variation in the gypsum hardened product, and improving kneading performance, and preferably 2000 rpm or less and more preferably 1800 rpm or less from the viewpoint of suppression of defoaming.

In step 2, a kneading time for the foam and the gypsum slurry is preferably 1 second or more, more preferably 3 seconds or more and further preferably 5 seconds or more from the viewpoints of increasing a bubble size and reducing a coefficient of variation in the gypsum hardened product, and improving kneading performance, and preferably 60 seconds or less, more preferably 30 seconds or less and further preferably 20 seconds or less from the viewpoint of suppression of defoaming.

Kneading of the foam and the gypsum slurry can be carried out using a well-known method, for example, any method described in US-B 4,518,652, US-B 2,080,009 and US-B 2,017,022. When it is carried out at laboratory scale, a method including, adding the gypsum slurry to the foam in a 1 L disposable cup and kneading them for 1 second or more and 30 seconds or less at a kneading rate of 500 rpm or more and 2000 rpm or less using a stirrer fitted with a flat 6 paddle blade (for example, FP-50, manufactured by AS ONE Corporation) in the 1 L disposable cup can be used.

### <Step 3>

After step 2, the following step 3 is further performed to produce the gypsum hardened product,
step 3: a step of molding and hardening the bubble-containing gypsum slurry after step 2.

The gypsum slurry can be molded or hardened by a publicly-known method. For example, a gypsum board, a fire-resistant material or the like can be produced by referring to "Production of gypsum board" on pages 322 to 324 of "Gypsum and Lime Handbook" (edited by Institute of Gypsum and Lime Research).

### Examples

The components used in the foaming agent compositions in Table 1 are shown below.

### Component (A)

· C10AS: sodium decyl sulfate, component (A11)
· C13AS: a sodium alkyl sulfate having an alkyl group with 12 to 16 carbons (mass ratio: C12/C14/C16 = 63.5/23.5/13.0), component (A11)
· AES: sodium polyoxyethylene alkyl ether sulfate, product name "EMAL D-3-D" manufactured by Kao Corporation, component (A1)
· AG: lauryl glycoside, product name "MYDOL 12" manufactured by Kao Corporation, component (A21) Component (B)
· C8OH: octanol, product name "KALCOL 0898" manufactured by Kao Corporation

### Component (C)

- BDG: diethylene glycol monobutyl ether, logP: 0.56, manufactured by Tokyo Chemical Industry Co., Ltd.

### <Examples 1 to 3 and comparative examples 1 to 2>

### (1) Preparation of foaming agent composition

Each foaming agent composition shown in Table 1 was prepared by the following method.

Raw materials shown in Table 1 were added to a 50 mL screw cap tube at predetermined proportions such that a total was 30 g, and stirred with a stirrer at 1000 rpm for 3 hours to prepare a foaming agent composition. When a solution viscosity was high and stirring efficiency was low, heating at 40°C was appropriately carried out.

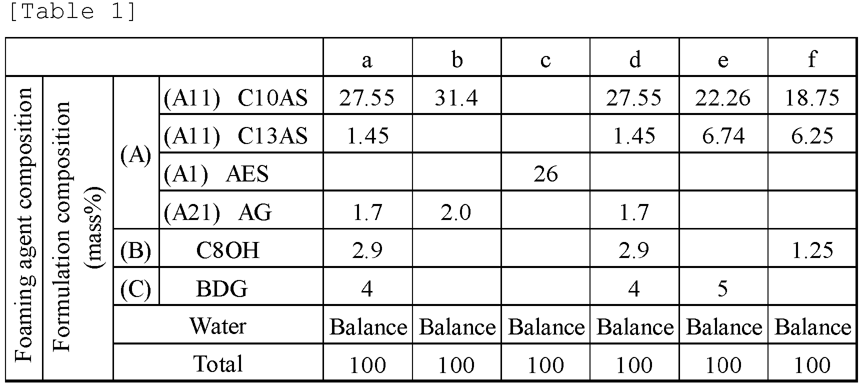

### (2) Preparation of gypsum slurry

A foaming agent composition shown in Table 1 and water were mixed at a proportion to achieve a concentration shown in Tables 2 and 3 to prepare a dilute aqueous solution of the foaming agent composition. 25 g of the prepared dilute aqueous solution was added into a 1 L disposable cup, and stirred with a stirrer (EUROSTAR 200 control, manufactured by IKA Japan K.K.) fitted with a flat 6 paddle blade (FP-50, manufactured by AS ONE Corporation) at 2000 rpm for 60 seconds to obtain a foam.

200 g of calcined gypsum, 2 g of dihydrate gypsum, 150 g of water and 0.8 g of a water reducing agent (MIGHTY 150, manufactured by Kao Corporation) were added to a 500 mL disposable cup, and stirred for 20 seconds using a hand mixer (MK-H4, manufactured by Panasonic Corporation) with its knob set to 3 to prepare a gypsum slurry before adding to the foam.

The whole amount of the prepared gypsum slurry was added to 25 g of the foam prepared in the 1 L disposable cup, and they were kneaded for 30 seconds at a kneading rate shown in Tables 2 and 3 with the stirrer fitted with the flat 6 paddle blade in the 1 L disposable cup to obtain a gypsum slurry containing bubbles. Note that a water/gypsum ratio in the gypsum slurry was 75 mass%. Temperatures of the foam and the gypsum slurry used for kneading were both 20°C.

### (3) Measurements of average bubble size and coefficient of variation of bubble size in gypsum hardened product

The obtained bubble-containing gypsum slurry was poured into a mold for cylindrical specimens with a diameter of 5 cm and a height of 10 cm (PLAMOLD, manufactured by Nifco Inc.), and left to stand for 1 hour or more at a room temperature.

The hardened gypsum slurry was demolded from the mold for cylindrical specimens, dried by leaving it to stand in a thermostatic chamber at 60°C for 24 hours, and then cut at a portion at a height of 5 cm to prepare a cross section of the hardened product. Diameters of 100 bubble cross sections were arbitrarily measured by observing the cross section with a digital microscope, and an average bubble size was calculated from an arithmetic mean of those values. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section. The result of the average bubble size of the gypsum hardened product is shown in Table 2 or 3.

Further, a coefficient of variation of bubble size in the obtained gypsum hardened product was calculated by the formula (1) below using a standard deviation in the 100 bubble sizes measured by the above operation and the average bubble size. The result of the coefficient of variation of bubble size in the gypsum hardened product is shown in Table 2 or 3. Coefficient of variation of bubble size = bubble size standard deviation/average bubble size

Further, a density of the obtained gypsum hardened product is shown in Table 2 or 3.

### (4) Measurement of strength of gypsum hardened product

Immediately after the gypsum hardened product in Table 2 or 3 obtained in (3) was left to stand in a thermostatic chamber at 40°C for 2 hours, a compression strength thereof was measured with a strength testing machine (CONCRETO 2000X, SHIMADZU CORPORATION) at a compression rate of 1 mm per minute.

The results are shown in Tables 2 and 3.

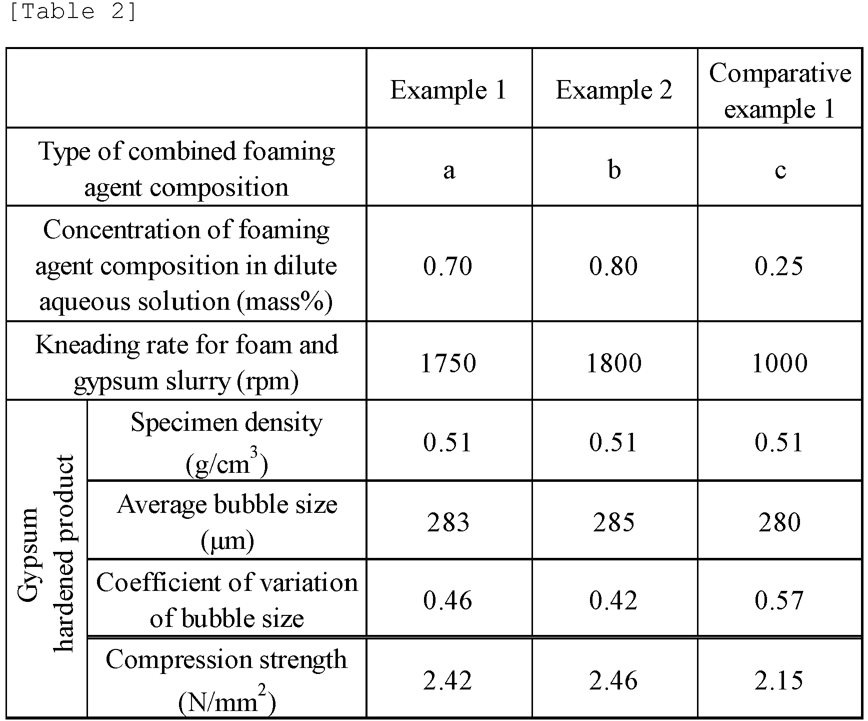

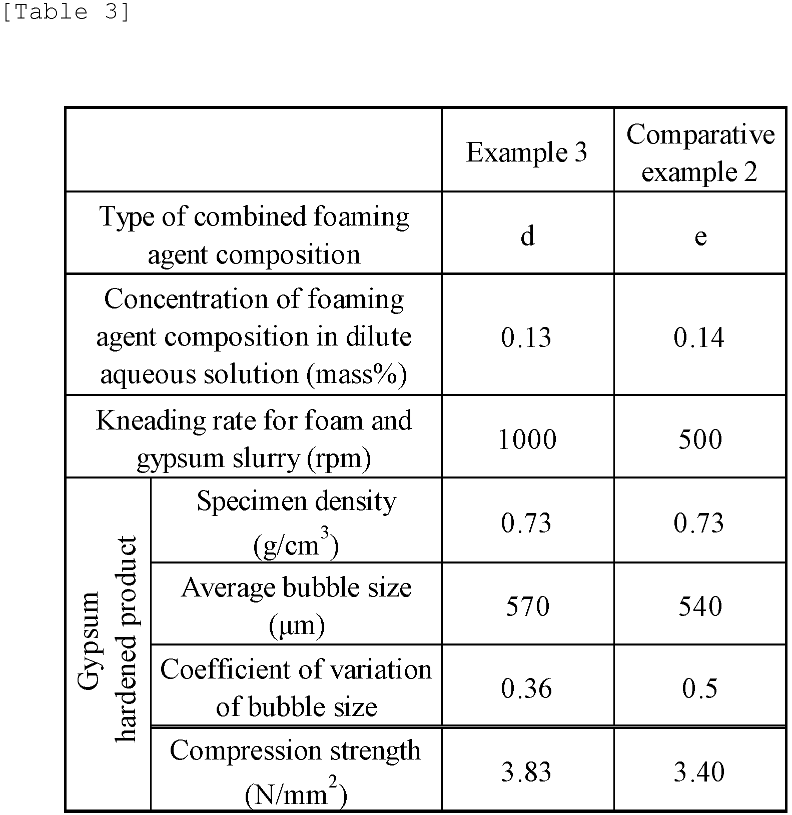

The gypsum hardened products in Table 2 and those in Table 3 were made to have specimen densities of 0.51 g/cm³ and 0.73 g/cm³, respectively. It is understood that, even if the gypsum hardened products have approximately the same specimen density and average bubble size, a gypsum hardened product whose value of coefficient of variation of bubble size falls within the range of the present invention has an improved compression strength.

### <Examples 4 to 10 and comparative example 3>

A foaming agent composition shown in Table 1 and water were mixed at a proportion to achieve a concentration shown in Table 4 to prepare a dilute aqueous solution of the foaming agent composition. Further, a gypsum slurry was prepared in the same manner as in the above (2) Preparation of gypsum slurry, except that the conditions for preparation of gypsum slurry were changed to those shown in Table 4. Note that the types of water reducing agents NSF and PCE stand for a naphthalenesulfonic acid-formaldehyde condensate salt (MIGHTY 150, manufactured by Kao Corporation) and a polycarboxylate ether-based high-performance water reducing agent (MIGHTY 21ER, manufactured by Kao Corporation), respectively. Further, potassium sulfate, a hardening accelerating agent (which does not contribute to improved compression strength) was added at the same time as dihydrate gypsum.

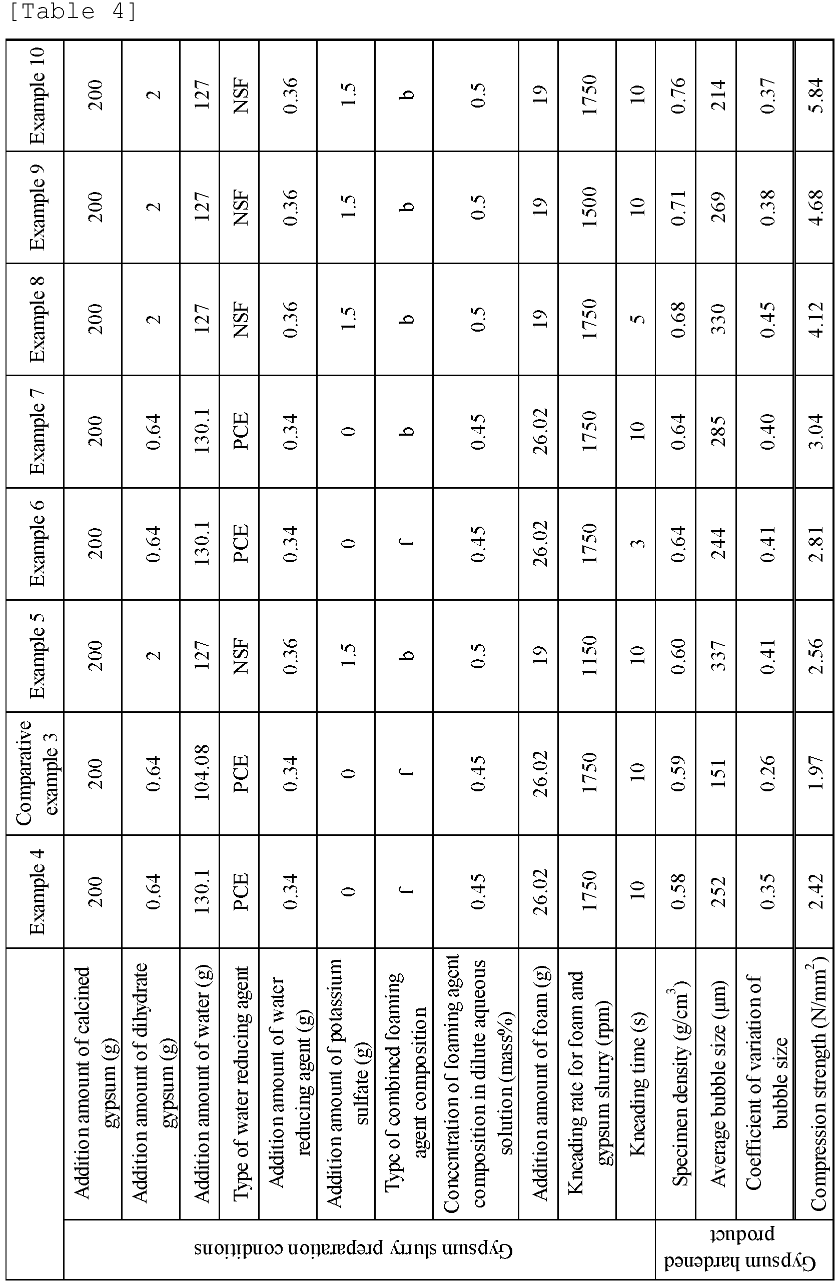

The test results of the gypsum hardened products in Table 4 are listed in order of increasing specimen density such that a comparison of compression strength can be made between hardened products with close densities as the compression strength of the gypsum hardened products tends to decrease as specimen density decreases. It is understood from a comparison between gypsum hardened products whose specimen densities are close that a gypsum hardened product whose values of average bubble size and coefficient of variation of bubble size fall within the range of the present invention has an improved compression strength.

## Claims

1. A gypsum hardened product containing bubbles,
wherein a density of the gypsum hardened product is 0.4 g/cm³ or more and 0.8 g/cm³ or less, and
in the gypsum hardened product, an average bubble size is 200 µm or more and 600 µm or less, and a coefficient of variation of bubble size is 0.30 or more and 0.48 or less.

2. The gypsum hardened product according to claim 1, wherein the density of the gypsum hardened product is 0.5 g/cm³ or more and 0.75 g/cm³ or less.

3. The gypsum hardened product according to claim 1 or 2, wherein the average bubble size in the gypsum hardened product is 250 µm or more and 580 µm or less.

4. The gypsum hardened product according to any one of claims 1 to 3, wherein the coefficient of variation of bubble size in the gypsum hardened product is 0.32 or more and 0.43 or less.

5. The gypsum hardened product according to any one of claims 1 to 4, comprising (A) a surfactant (hereinafter referred to as component (A)) and gypsum.

6. The gypsum hardened product according to claim 5, wherein the component (A) is one or more selected from (A1) an anionic surfactant (hereinafter referred to as component (A1)) and (A2) a nonionic surfactant (hereinafter referred to as component (A2)).

7. The gypsum hardened product according to claim 6, wherein the component (A1) is an alkyl or alkenyl sulfate or a salt thereof having an alkyl group or an alkenyl group with 8 or more and 18 or less carbons.

8. The gypsum hardened product according to claim 6 or 7, wherein the component (A2) is an alkyl glycoside-type nonionic surfactant.

9. The gypsum hardened product according to any one of claims 5 to 8, further comprising (B) a monohydric alcohol with 6 or more and 10 or less carbons (hereinafter referred to as component (B)).

10. The gypsum hardened product according to any one of claims 5 to 9, further comprising (C) a nonionic compound with a LogP of 0 or more and less than 2.0 (excluding a compound qualifying as component (B)).

11. The gypsum hardened product according to any one of claims 1 to 10, wherein the hardened product is a gypsum board.

12. A method for producing the gypsum hardened product according to any one of claims 1 to 4, comprising the following steps 1, 2 and 3,
<step 1>
a step of foaming a liquid composition containing a foaming agent composition containing (A) a surfactant (hereinafter referred to as component (A)) and water to obtain a foam,
<step 2>
a step of mixing the foam obtained in the step 1 with a gypsum slurry containing gypsum and water to obtain a bubble-containing gypsum slurry, and
<step 3>
a step of molding and hardening the bubble-containing gypsum slurry after the step 2.

13. The method for producing the gypsum hardened product according to claim 12, wherein a kneading rate for mixing the foam with the gypsum slurry in the step 2 is 250 rpm or more and 2000 rpm or less.

14. The method for producing the gypsum hardened product according to claim 12 or 13, wherein a kneading time for mixing the foam with the gypsum slurry in the step 2 is 1 second or more and 60 seconds or less.

15. The method for producing the gypsum hardened product according to any one of claims 12 to 13, wherein the component (A) is one or more selected from (A1) an anionic surfactant (hereinafter referred to as component (A1)) and (A2) a nonionic surfactant (hereinafter referred to as component (A2)).

16. The method for producing the gypsum hardened product according to claim 15, wherein the component (A1) is an alkyl or alkenyl sulfate or a salt thereof having an alkyl group or an alkenyl group with 8 or more and 18 or less carbons.

17. The method for producing the gypsum hardened product according to claim 15 or 16, wherein the component (A2) is an alkyl glycoside-type nonionic surfactant.

18. The method for producing the gypsum hardened product according to any one of claims 12 to 17, wherein the foaming agent composition further comprises (B) a monohydric alcohol with 6 or more and 10 or less carbons (hereinafter referred to as component (B)).

19. The method for producing the gypsum hardened product according to any one of claims 12 to 18, wherein the foaming agent composition further comprises (C) a nonionic compound with a LogP of 0 or more and less than 2.0 (excluding a compound qualifying as component (B)).
